# EUROPEAN PATENT SPECIFICATION

(11) **EP 2 833 531 B1**
(45) Date of publication and mention of the grant of the patent: **21.09.2016**
(21) Application number: 14176532.1
(22) Date of filing: 10.07.2014
(51) Int. Cl.: H02M 3/158, H02J 9/06

(54) **Bi-directional battery converter and balancer for an electric energy storage of a power supply system**
Bidirektionaler Batteriewandler und Ausgleichsvorrichtung für eine elektrische Energiespeicherung eines Stromversorgungssystems
Convertisseur de batterie bidirectionnel et dispositif d'équilibrage permettant le stockage d'énergie électrique d'un système d'alimentation électrique

(30) Priority: 31.07.2013 EP 13178659
(43) Date of publication of application: 04.02.2015
(73) Proprietor: ABB Schweiz AG, 5400 Baden (CH)
(72) Inventor: Marbach, Filippo, 6914 Carona (CH)
(74) Representative: ABB Patent Attorneys

(56) References cited:
- US-A1- 2008 061 628
- US-A1- 2012 169 126
- US-A1- 2013 049 699

## Description

### FIELD OF THE INVENTION

The invention relates to the field of power supply systems, in particular to uninterruptable protection systems for train applications. In particular, the invention relates to a power supply system for supplying a load with electric energy from an electrical network and to a method for operating a power supply system.

### BACKGROUND OF THE INVENTION

In train or railroad systems, an automatic train protection system enables a safe operation for all vehicles (trains) by supervising and controlling the position and the speed of all vehicles circulating on the railroads. An automatic train protection and other railroad equipment (such as railroad switches, level crossings, railroad lighting, etc.) may require a secure power supply that is adapted to provide auxiliary power to the critical loads of the system for a predetermined amount of time. Such power supply systems are also called uninterruptable protection systems.

An uninterruptable power supply or protection system may comprise one or more power supply modules that are adapted for generating an AC output current from an input current supplied by an electrical network. For an AC electrical network, a power supply module may comprise a rectifier supplying a DC link, which is interconnected with an inverter for generating the AC output current. In the case of a DC electrical network, the rectifier may be omitted. The inverter and/or rectifier may have a converter topology with two half-bridge phase legs, which are connected to a split DC link with a centered neutral point. A simple and economical topology may be a half-bridge rectifier and a half-bridge inverter with a split DC link and a neutral/common reference point passing through from input to output. These topologies apply as well to both 4-wire (400 V) and 3-wire (480 V as in North America) systems.

For providing auxiliary energy, when the electrical network is down, an uninterruptable protection system usually comprises an electric energy storage in the form of a rechargeable battery or accumulator. For example, lead acid batteries may be used as electric energy storages in uninterruptable protection systems.

Sometimes a common battery is used for several power supply modules, but this may cause operational or cost problems at system level as the battery can introduce a current path that may require complicated or expensive solutions to avoid excessive and/or uncontrolled circulating current between the power supply modules.

Several solutions to these problems are available and commonly used. For example, a three wire battery (i.e. a battery with positive, negative and midpoint input) may be used, with the midpoint input centered on a stable reference potential, which typically is the neutral point of the power supply system. Such a system usually is simple to control and may be inherently stable but a split/three wire battery results in higher costs due to cabling, protection and the need for two DC-DC converters supporting a two sided or split DC link and charge function.

As another example, a two wire battery (i.e. a battery with a positive and negative input) may be used, which is connected with one input to an unstable but controlled potential, for instance to a potential of a DC link of a power supply module. In this case, the protection and the number of converters may be less, but a control is usually more difficult and typically requires additional impedances and control circuitry between different power supply modules to limit circulating currents via active and passive control to a practical level.

A topology with a battery connected to an unstable potential may additionally be a potentially severe EMI sources, which may require appropriate and costly solutions to conform to regulations. The battery cabling for a large system may potentially function as a radiating antenna.

Alternative solutions are known from US-A-2012/169126, US-A- 2008/061628 or US-A-2013/049699.

### DESCRIPTION OF THE INVENTION

It is an object of the invention to provide a simple, easy to control and cheap uninterruptable protection system.

This object may be achieved with the subject-matter of the independent claims. Further exemplary embodiments are evident from the dependent claims and the following description.

An aspect of the invention relates to a power supply system for supplying a load with electric energy from an electrical network. The electric network may be a large scale grid, such as a 16 2/3 Hz AC train voltage network, a 230 V/50/60 Hz network or DC network. The load or loads may comprise a train protection system and railroad equipment such as sensors, switches, etc.

According to an embodiment of the invention, the power supply system comprises one or more power supply modules, each of which may comprise a rectifier (only in the case of an AC input electrical network), a DC link and an inverter connected in series. In the case of a plurality of power supply modules, these modules may be connected in parallel to the electrical network.

According to an embodiment of the invention, the power supply module (or all power supply modules) comprise(s) a DC link to be supplied from the electrical network (for example via a rectifier) and an inverter connected to the DC link and adapted for converting the DC voltage from the DC link into an AC voltage to be supplied to the load. The power supply system comprises an electric energy storage to be charged by the DC link and for supplying the DC link with electric energy, for example when the electrical network has a power failure. The electric energy storage is connected with one input to a neutral point of the power supply module. The power supply module comprises a bidirectional buck/boost converter, which is connected to a positive or negative potential of the DC link, to the neutral point and to another input of the electric energy storage.

A bidirectional buck/boost converter may be a DC-DC converter with a half-bridge and an inductivity connected to the midpoint of the half bridge. With the bidirectional buck/boost converter, the electric energy storage may be charged or discharged, which also allows a load share with a rectifier connected to the DC link, for example, for overload or for battery diagnostics. It has to be noted that only one single bi-directional converter for charging/discharging the electric energy storage may be provided between the electric energy storage and the DC link, which may simplify the system and its control, may save cabling and components.

Furthermore, the bidirectional buck/boost converter may support either but not both parts of a split DC link. The bidirectional buck/boost converter may be rated for full system power.

Also the electrical energy storage, which may be a rechargeable battery or accumulator, connected to an input of the bidirectional buck/boost converter and to a system stable neutral potential, may be rated for full system power. Since the electric energy storage may be connected to a stable potential shared by all power supply modules, i.e. a common neutral point, no uncontrolled circulating currents between power supply modules may be present.

According to an embodiment of the invention, the DC link is a split and/or two-sided DC link, for example may comprise two capacitors interconnected in series between the positive and the negative potential of the DC link, wherein the neutral point is provided between the two capacitors, i.e. at a midpoint of the split DC link. In this way, one end of the electric energy storage is connected to the midpoint and to one side of a two-sided DC link.

According to an embodiment of the invention, the electric energy storage comprises only two inputs, i.e. may be a battery with only two terminals, such as a simple standard acid lead accumulator. Such a battery connection may be the simplest possible. The proposed topology may utilize a two wire battery with one end connected to a stable neutral potential in a power supply module, for example a neutral potential of the overall power supply system.

Such a battery may provide an additional benefit due to a practical commercial component availability, which allows a simple realization of a 'battery charger' function at up to rated system power. This may be of importance in areas of very weak utility or alternative energy applications. This topology also allows to use three wire legacy batteries without connecting the midpoint.

According to an embodiment of the invention, the power supply module further comprises a further bidirectional buck/boost converter interconnecting the neutral point, the negative potential and the positive potential of the DC link. The above mentioned first bidirectional buck/boost converter may be seen as a charging/discharging converter. The additional further second converter may be seen as a balancing converter for balancing loads between the parts of a split DC link and/or between different DC links under system dynamical situations.

With the balancing converter, a DC component of an AC current to the DC link may be controlled to maintain regulation and balance of the AC and DC components of the currents, for example during charging of the electric energy storage.

Additionally, during an unbalanced loading of different DC link, the balancing converter may compensate different loads by an energy transfer between two or more DC links.

Summarized, each power supply module may comprise a first buck/boost converter interconnecting an electric energy storage with one half or part of the DC link and a second buck/boost converter for transferring energy required for load support for the opposite half cycle to the respective other half of the DC link.

According to an embodiment of the invention, the first buck/boost converter and/or the further, second buck/boost converter comprise a half-bridge (two semiconductor switches connected in series) providing a first output and a second output and an inductivity connected with one end to an midpoint of the half-bridge (between the two semiconductor switches) and providing with another end a third output. Both of the buck/boost converters are bi-directional, wherein the first converter may function as a charger with the same components thus having a very high potential charge capability.

The buck/boost converter and/or the further buck/boost converter furthermore may comprise two diodes, each diode connected in parallel to one of the semiconductor switches.

According to an embodiment of the invention, the buck/boost converter interconnected with the electric energy storage is connected with the first output to the electric energy storage, with the second output to the neutral point and with the third output to the positive or negative potential of the DC link. In such a way, during charging, the voltage of the electric energy storage may be higher than the voltage of the positive (or negative) potential of the DC link.

According to an embodiment of the invention, the buck/boost converter interconnected with the electric energy storage is connected with the first output to the positive or negative potential of the DC link, with the second output to the neutral point and with the third output to the electric energy storage. In such a way, during discharging, the voltage of the positive (or negative) potential of the DC link may be higher as the voltage of the electric energy storage.

According to an embodiment of the invention, the further buck/boost converter is connected with the first output to the positive potential of the DC link, with the second output to the negative potential of the DC link and with the third output to the neutral point.

According to an embodiment of the invention, the power supply system comprises a plurality of power supply modules, each power supply module comprising a DC link connected to the electric energy storage. All power supply modules may be equally designed and may all have two buck/boost converters as described in the above and the following. This may result in a scalable and/or modular power supply system, comprising individual parallel power supply modules. The module may have either independent electric energy storages or a common electric energy storage, which in both cases may comprise lead acid batteries.

According to an embodiment of the invention, the power supply modules are connected via their neutral points, which are connected to one input of the electric energy storage; wherein each power supply module comprises a bidirectional buck/boost converter interconnecting the other input of the electric energy storage with a positive potential or negative potential of the DC link of the respective power supply module. In such a way, the balancing buck/boost converters may be additionally used for balancing loads between the power supply modules via the common neutral point.

A further aspect of the invention relates to a method for operating a power supply system, which may be designed as described above and below. For example, the method may be performed by a controller of the power supply system. The method may be implemented in the controller as a computer program (i.e. software) or may be implemented at least partially in hardware. It has to be understood that features of the method as described in the above and in the following may be features of the power supply system as described in the above and in the following and vice versa.

According to an embodiment of the invention, the method comprises: charging an electric energy storage from a DC link of at least one power supply module of the power supply system with a bidirectional buck/boost converter, wherein the electric energy storage is connected with one input to a neutral point of the power supply module and with another input to the buck/boost converter, wherein the bidirectional buck/boost converter is connected to a positive or negative potential of the DC link and is connected with the neutral point; and supplying the DC link with electric energy by discharging the electric energy storage via the bidirectional buck/boost converter to the DC link. A single DC-DC converter may be used for either charging or discharging the electric energy storage via only one legof a split DC link. No uncontrolled and/or circulating current may be present, for instance in a 4-wire installation (i.e. standard 400 V installation, phases and neutral). Furthermore, the electric energy storage is at a stable reference potential.

According to an embodiment of the invention, the method further comprises: balancing electric energy stored in DC link capacitors of the power supply module, for example during discharging of the electric energy storage, by operating a further buck/boost converter interconnecting the neutral point, the negative potential and the positive potential of the DC link. With an additional second bi-directional converter, energy may be transferred from the part of the DC link supported by the first converter to the opposite part of the DC link or vice versa to maintain a regulation. The balancing converter may compensate for a DC component on an AC input current during charging of the electric energy storage and/or support of an unbalanced e.g. half wave rectified load.

According to an embodiment of the invention, the method further comprises: charging the electric energy storage of at least one power supply module of the power supply system with the bidirectional buck/boost converter, wherein a DC component of a current drawn from an electrical network is actively controlled through the further buck/boost converter.

According to an embodiment of the invention, the method further comprises: balancing electric energy between at least two DC links of at least two power supply modules of the power supply system via buck/boost converters, the power supply modules being interconnected via their DC link neutral points and each power supply module comprising a buck/boost converter interconnecting the respective neutral point, the respective negative potential and the respective positive potential of the DC link of the respective power supply module. The second converter connected via a common neutral point between DC links may selectively and bi-directionally transfer energy from DC link to DC link to maintain individual link regulation, in particular under steady state conditions and/or under dynamic conditions.

In particular, the use of the second converter allows for DC link control under dynamic conditions (independently from the charging and discharging function of the first converter), for instance a reverse energy flow from the inverter of a power supply module under dynamic load conditions or severe instances of unbalanced link loading, for example when connecting to a large inductive load (such as a transformer). This may prevent a potential system shut down due to an uncontrollable DC link overshoot.

A further aspect of the invention relates to a controller for a power supply system as described in the above and in the following, which is adapted for performing the method as described in the above and in the following. The system level control as well as the controller may be very simple as all common points are either at reference or may be independently and individually controlled. No additional hardware or control at the parallel system level is required.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a power supply system according to an embodiment of the invention.
Fig. 2 schematically shows a part of a power supply module according to an embodiment of the invention.
Fig. 3 schematically shows a converter for a power supply according to an embodiment of the invention.
Fig. 4 shows a flow diagram for a method for operating a power supply system according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

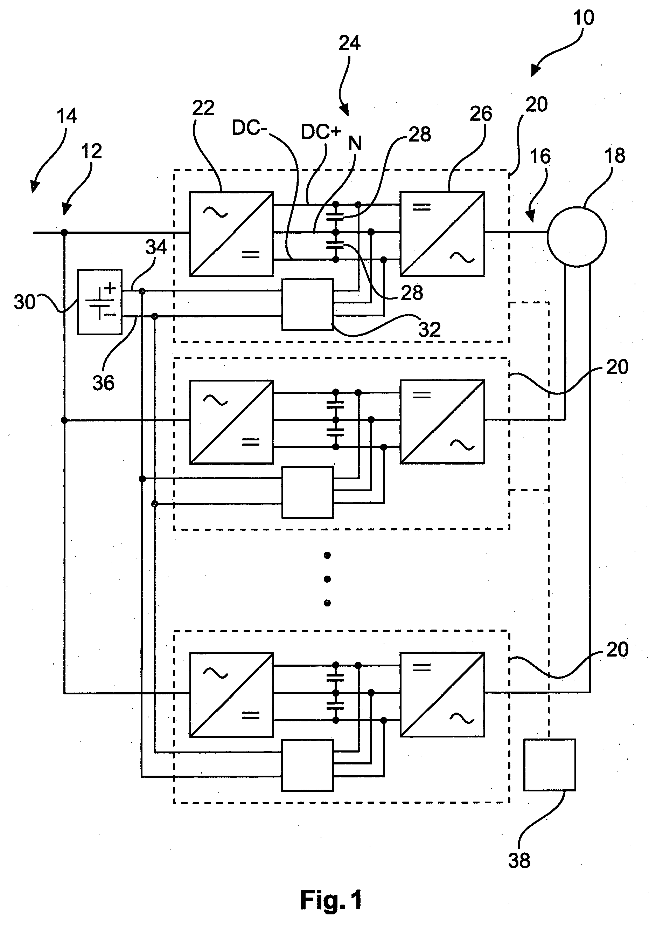

Fig. 1 shows a power supply system 10 that at an input 12 is connected to an electrical network 14 and at an output 16 is connected to one or more loads 18. The power supply system 10 may be part of an uninterruptable protection system, for example for train or railroad applications. The electrical 14 network may be a (single phase) 16 2/3 Hz railroad network or may be a (three phase) 230 V / 50/ 60 Hz network.

The power supply system 10 comprises a plurality of equally designed power supply modules 20 connected in parallel to the electrical network 14 at the input 12. Due to reasons of clarity, only the first power supply module 20 is provided with reference numerals. However, all power supply modules may comprise equal components.

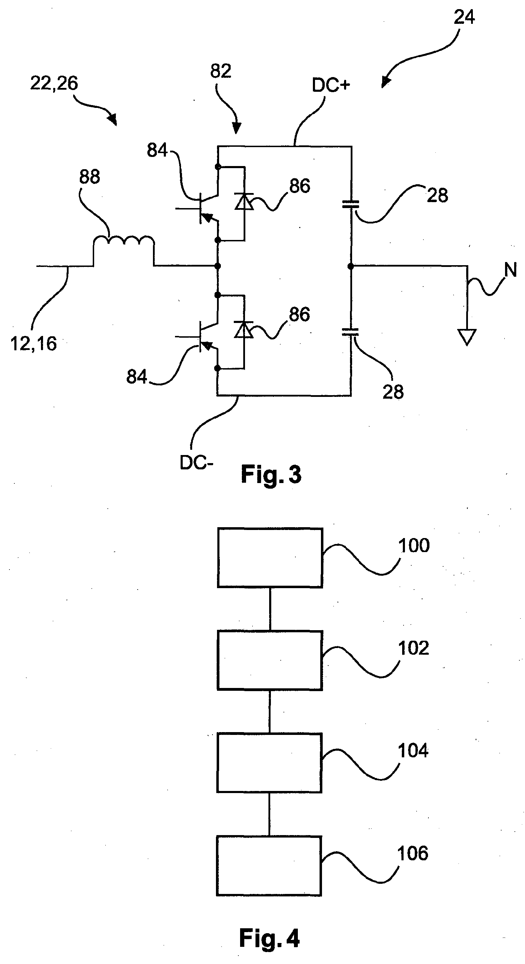

Each power supply module 20 comprises a rectifier 22, a DC link 24 and an inverter 26 connected in series between the input 12 and the output 16. The rectifier 22 and the inverter 26 may be designed as shown in Fig. 3 described below. The split DC link comprises two capacitors 28 connected in series between a positive potential DC+ and a negative potential DC-, which have a midpoint which provides a neutral point potential N.

Furthermore, each power supply module 20 comprises an energy converter 32 for transferring energy between a common electric energy storage 30 and the DC link 24, between the upper and lower capacitor 28 of one DC link 24 and between the DC links 24 of different power supply modules 20.

The common electric energy storage 30 may comprise an acid lead battery with two inputs 34, 36 that are connected to the energy converters 32, which are connected in parallel to the electric energy storage 30.

Additionally, the power supply system 10 comprises a controller 38 that is adapted to control all power supply modules 20, in particular, the rectifiers 22, inverters 26 and the energy converters 32. The controller 38 may receive sensor inputs from current and voltage sensors all over the system 10, from which all voltages and current in the system 10 may be derived. These voltages and currents may be regulated by the control of the controller 38.

As indicated in Fig. 1, the controller 38 may be a central controller. Alternatively, the controller 38 may be distributed among the power supply modules 20.

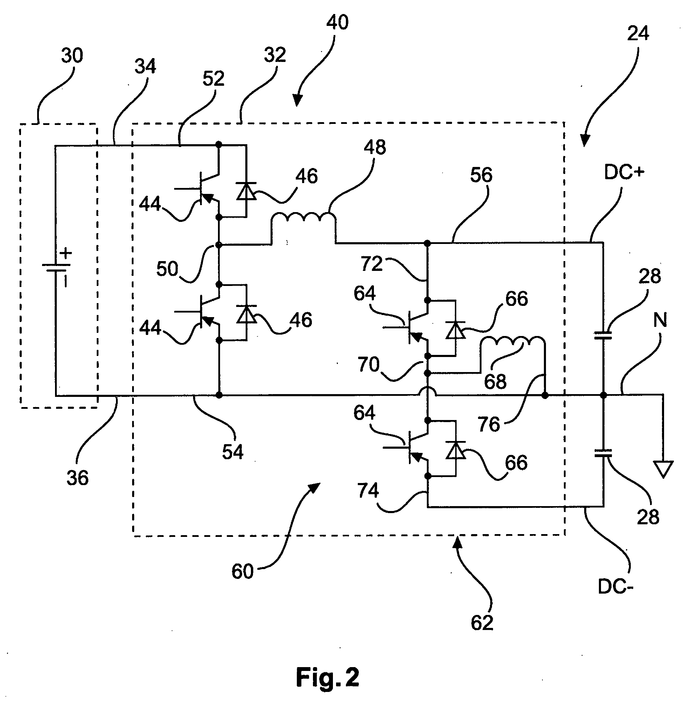

Fig. 2 shows details of the energy converter 32, which on one side is connected to the positive potential DC+, the neutral point potential N and the negative potential of the DC link 24 and on another side is connected to the inputs of the electric energy storage 30.

It has to be noted that the neutral point potential N is directly connected with the negative input 36 of the electric energy storage. In such a way, all neutral point potentials N of all power supply modules 20 are directly connected.

The energy converter 32 comprises a first buck/boost converter 40 for charging and discharging the electric energy storage, which comprises a half-bridge 42 with two semiconductor switches (transistors) 44 connected in series that are switched by the controller 38. A diode 46 is connected in parallel to each semiconductor switch 44. An inductivity 48 is connected to a midpoint 50 between the two semiconductor switches 46. The half-bridge 42 provides a first output 52 on one end that is connected with the positive input 34 of the electric energy storage 30 and at a further end a second output 54 that is connected with the neutral point potential N. A third output 56 of the converter 40 is provided by the inductivity 48 that is connected with the positive potential DC+ of the DC link 24.

Alternatively, it is possible that the output 52 is connected with the positive potential DC+ and that the output 56 is connected with the input 34 of the electric energy storage. As a further alternative, the first converter may be connected to the negative potential DC- (either with the output 54 or the output 56).

The energy converter 32 comprises a second buck/boost converter 60 for balancing energy between the capacitors 28 of the DC link 24 and between different DC links 24. The second converter 60 comprises the same components as the first converter 40. The second converter comprises a half-bridge 62 with two semiconductor switches (transistors) 64 connected in series that are switched by the controller 38. A diode 66 is connected in parallel to each semiconductor switch 64. An inductivity 68 is connected to a midpoint 70 between the two semiconductor switches 66. The half-bridge 62 provides a first output 72 on one end that is connected with the positive potential DC+ and at a further end a second output 74 that is connected with the negative potential DC-. A third output 76 of the converter 60 is provided by the inductivity 68 that is connected with the neutral point potential N.

Fig. 3 shows a possible topology of the converters 22, 26 of the power supply module 20. The converters 22, 26 may be designed analogously to the converters 40, 60. A half-bridge 82 with two semiconductor switches (transistors) 84 connected in series that are switched by the controller 38 may interconnect the positive potential DC+ and the negative potential DC-A diode 86 is connected in parallel to each semiconductor switch 84. An inductivity 88 is connected to a midpoint between the two semiconductor switches 86. The other end of the inductivity 88 provides the input 12 or output 16 of the power supply module 20.

Fig. 4 shows a method for operating a power supply system 10, which is performed by the controller 38.

In step 100, the controller detects that the electric energy storage needs to be charged and that the electric network 14 is up. This, for example, may be the case after the startup of the power supply system 10 or after a power failure of the electrical network 14. The controller 38 charges the electric energy storage 30 from the DC link 24 of at least one power supply module 20 of the power supply system 10. To achieve this, the switches 44 of the bidirectional buck/boost converter 40 are switched that energy from the DC link 24 is transferred to the electric energy storage 30. In addition, the converter 60 may balance energy transferred to the energy storage 30 from both DC links in such a way that the current from the electric network 14 is substantially balanced and does substantially have no DC component.

In step 102, the controller 38 detects that the DC link 24 needs to be supplied with energy from the electric energy storage 30. For example, this may be the case, when the electrical network 14 has a power failure. In this case, the controller 38 discharges the electric energy storage 30 via the bidirectional buck/boost converter 40 to the DC link 24. To achieve this, the switches 44 of the bidirectional buck/boost converter 40 are switched that energy from the electric energy storage 30 is transferred to the DC link 24.

In step 104, the controller 38 balances electric energy stored in the DC link capacitors 28. This may be performed during discharging of the electric energy storage 30. The controller 38 operates the switches 64 of the further buck/boost converter 60 such that energy from the upper capacitor is transferred to the lower capacitor 28.

In step 106, the controller 38 detects that the energy distribution between the DC links 24 of the power supply modules 20 is not balanced. The controller balances the electric energy between at least two DC links 24 of at least one power supply modules 20 of the power supply system 10 via the buck/boost converters 60 by switching the switches 64 correspondingly.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A power supply system (10) for supplying a load (18) with electric energy from an electrical network (14), the power supply system (10) comprising at least one power supply module (20), which comprises:
a DC link (24) to be supplied from the electrical network (14); and
an inverter (26) connected to the DC link (24) and adapted for converting a DC voltage from the DC link (24) into an AC voltage to be supplied to the load (18);
wherein the power supply system (10) comprises an electric energy storage (30) to be charged by the DC link (24) and for supplying the DC link (24) with electric energy, when the electrical network (14) has a power failure, the electric energy storage (30) connected with one input (36) to a neutral point (N) of the power supply module (20);
wherein the DC link (24) comprises at least two capacitors (28) interconnected in series between the positive potential (DC+) and the negative potential (DC-) of the DC link (24), wherein the neutral point (N) is provided between the at least two capacitors (28) wherein the power supply module (20) comprises a bidirectional buck/boost converter (40) for charging and discharging the electric energy storage (30) connected to the positive potential (DC+) or the negative potential (DC-) of the DC link (24), to the neutral point (N) and to another input (34) of the electric energy storage (30)
wherein the power supply module (20) comprises a further bidirectional buck/boost converter (60) for balancing electric energy stored in the DC link capacitors (28) interconnecting the neutral point (N), the negative potential (DC-) and the positive potential (DC+) of the DC link (24).

2. The power supply system (10) of claim 1,
wherein the electric energy storage (30) comprises only two inputs (34, 36).

3. The power supply system (10) of one of the preceding claims,
wherein the buck/boost converter (40) and/or the further buck/boost converter (60) comprises two semiconductor switches (44, 64) connected in series providing a first output (52, 72) and a second output (54, 74), and an inductivity (48, 68) connected with one end between the two semiconductor switches (44, 46) and providing with another end a third output (56, 76).

4. The power supply system (10) of claim 3,
wherein the buck/boost converter (40) and/or the further buck/boost converter (60) comprises two diodes (46, 66), each diode connected in parallel to one of the semiconductor switches (44, 66).

5. The power supply system (10) of claim 3 or 4,
wherein the buck/boost converter (40) for charging and discharging the electric energy storage (30) is connected with the first output (52) to the electric energy storage (30), with the second output (54) to the neutral point (N) and with the third output (56) to the positive potential (DC+) or negative potential (DC-) of the DC link (24).

6. The power supply system (10) of claim 3 or 4,
wherein the buck/boost converter (40) for charging and discharging the electric energy storage (30) is connected with the first output (52) to the positive potential (DC+) or to the negative potential (DC-) of the DC link (24), with the second output (54) to the neutral point (N) and with the third output (56) to the electric energy storage (30).

7. The power supply system (10) of one of claims 3 to 6,
wherein the further buck/boost converter (60) is connected with the first output (72) to the positive potential (DC+) of the DC link (24), with the second output (74) to the negative potential (DC-) of the DC link (24) and with the third output (76) to the neutral point (N).

8. The power supply system (10) of one of the preceding claims,
wherein the power supply system (10) comprises a plurality of power supply modules (20), each power supply module (20) comprising a DC link (24) connected to the electric energy storage (30).

9. The power supply system (10) of claim 8,
wherein the power supply modules (20) are connected via their neutral points (N), which are connected to one input (36) of the electric energy storage (30);
wherein each power supply module (20) comprises a bidirectional buck/boost converter (40) interconnecting the other input (34) of the electric energy storage (30) with a positive potential (DC+) or a negative potential (DC-) of the DC link (24) of the respective power supply module (20).

10. A method for operating a power supply system (10), the method comprising:
charging an electric energy storage (30) from a DC link (24) of at least one power supply module (20) of the power supply system (10) with a bidirectional buck/boost converter (40), wherein the electric energy storage (30) is connected with one input (36) to a neutral point (N) of the power supply module (20) and with another input (34) to the buck/boost converter (40), wherein the bidirectional buck/boost converter (40) is connected to a positive potential (DC+) or negative potential (DC-) of the DC link (24) and is connected with the neutral point (N); and
supplying the DC link (24) with electric energy by discharging the electric energy storage (30) via the bidirectional buck/boost converter (40) to the DC link (24).

11. The method of claim 10, further comprising:
balancing electric energy stored in DC link capacitors (28) of the power supply module (20) during discharging of the electric energy storage (30) by operating a further buck/boost converter (60) interconnecting the neutral point (N), the negative potential (DC-) and the positive potential (DC+) of the DC link (24).

12. The method of claim 11, further comprising:
charging the electric energy storage (30) from the DC link (24) of at least one power supply module (20) of the power supply system (10) with the bidirectional buck/boost converter (40), wherein a DC component of a current drawn from an electrical network (14) is actively controlled through the further buck/boost converter (60).

13. A controller (38) for a power supply system (10) according to one of the claims 1 to 9 adapted for performing the method of one of claims 10 to 12.

## Patentansprüche

1. Stromversorgungssystem (10) zum Versorgen einer Last (18) mit elektrischer Energie von einem elektrischen Netzwerk (14), wobei das Stromversorgungssystem (10) wenigstens ein Stromversorgungsmodul (20) umfasst, das Folgendes umfasst:
einen Gleichspannungszwischenkreis (24), der vom elektrischen Netzwerk (14) gespeist wird; und einen Wechselrichter (26), der mit dem Gleichspannungszwischenkreis (24) verbunden ist und ausgelegt ist, um eine Gleichspannung vom Gleichspannungszwischenkreis (24) in eine Wechselspannung, die der Last (18) bereitgestellt wird, zu wandeln;
wobei das Stromversorgungssystem (10) einen elektrischen Energiespeicher (30) umfasst, der vom Gleichspannungszwischenkreis (24) geladen wird und der den Gleichspannungszwischenkreis (24) mit elektrischer Energie versorgt, wenn im elektrischen Netzwerk (14) ein Stromausfall auftritt, wobei der elektrische Energiespeicher (30) mit einem Eingang (36) zu einem Neutralpunkt (N) des Stromversorgungsmoduls (20) verbunden ist;
wobei der Gleichspannungszwischenkreis (24) wenigstens zwei Kondensatoren (28) umfasst, die zwischen dem positiven Potential (DC+) und dem negativen Potential (DC-) des Gleichspannungszwischenkreises (24) in Reihe geschaltet sind, wobei der Neutralpunkt (N) zwischen den wenigstens zwei Kondensatoren (28) bereitgestellt wird, wobei das Stromversorgungsmodul (20) einen bidirektionalen Abwärts-/Aufwärtswandler (40) zum Laden und Entladen des elektrischen Energiespeichers (30), der mit dem positiven Potential (DC+) oder dem negativen Potential (DC-) des Gleichspannungszwischenkreises (24), mit dem Neutralpunkt (N) und einem weiteren Eingang (34) des elektrischen Energiespeichers (30) verbunden ist, umfasst, wobei das Stromversorgungsmodul (20) einen weiteren bidirektionalen Abwärts-/Aufwärtswandler (60) zum Ausgleichen der elektrischer Energie, die in den Gleichspannungszwischenkreiskondensatoren (28), die den Neutralpunkt (N), das negative Potential (DC-) und das positiven Potential (DC+) des Gleichspannungszwischenkreises (24) zusammenschalten, gespeichert ist, umfasst.

2. Stromversorgungssystem (10) nach dem Anspruch 1, wobei der elektrische Energiespeicher (30) lediglich zwei Eingänge (34, 36) umfasst.

3. Stromversorgungssystem (10) nach einem der vorstehenden Ansprüche, wobei der Abwärts-/Aufwärtswandler (40) und/oder der weitere Abwärts-/Aufwärtswandler (60) zwei Halbleiterschalter (44, 64), die in Reihe verbunden sind und einen ersten Ausgang (52, 72) und einen zweiten Ausgang (54, 74) bereitstellen, sowie eine Induktivität (48, 68), die mit einem Ende zwischen den zwei Halbleiterschaltern (44, 46) verbunden ist und mit einem weiteren Ende einen dritten Ausgang (56, 76) bereitstellt, umfassen.

4. Stromversorgungssystem (10) nach dem Anspruch 3, wobei der Abwärts-/Aufwärtswandler (40) und/oder der weitere Abwärts-/Aufwärtswandler (60) zwei Dioden (46, 66) umfassen und jede Diode mit einem der Halbleiterschalter (44, 66) parallel verbunden ist.

5. Stromversorgungssystem (10) nach dem Anspruch 3 oder 4, wobei der Abwärts-/Aufwärtswandler (40) zum Laden und Entladen des elektrischen Energiespeichers (30) mit dem ersten Ausgang (52) zum elektrischen Energiespeicher (30), mit dem zweiten Ausgang (54) zum Neutralpunkt (N) und mit dem dritten Ausgang (56) zum positiven Potential (DC+) oder negativen Potential (DC-) des Gleichspannungszwischenkreises (24) verbunden ist.

6. Stromversorgungssystem (10) nach dem Anspruch 3 oder 4, wobei der Abwärts-/Aufwärtswandler (40) zum Laden und Entladen des elektrischen Energiespeichers (30) mit dem ersten Ausgang (52) zum positiven Potential (DC+) oder zum negativen Potential (DC-) des Gleichspannungszwischenkreises (24), mit dem zweiten Ausgang (54) zum Neutralpunkt (N) und mit dem dritten Ausgang (56) zum elektrischen Energiespeicher (30) verbunden ist.

7. Stromversorgungssystem (10) nach einem der Ansprüche 3 bis 6, wobei der weitere Abwärts-/Aufwärtswandler (60) mit dem ersten Ausgang (72) zum positiven Potential (DC+) des Gleichspannungszwischenkreises (24), mit dem zweiten Ausgang (74) zum negativen Potential (DC-) des Gleichspannungszwischenkreises (24) und mit dem dritten Ausgang (76) zum Neutralpunkt (N) verbunden ist.

8. Stromversorgungssystem (10) nach einem der vorstehenden Ansprüche, wobei das Stromversorgungssystem (10) eine Mehrzahl an Stromversorgungsmodulen (20) umfasst und jedes Stromversorgungsmodul (20) einen Gleichspannungszwischenkreis (24) umfasst, der mit dem elektrischen Energiespeicher (30) verbunden ist.

9. Stromversorgungssystem (10) nach dem Anspruch 8, wobei die Stromversorgungsmodule (20) über ihre Neutralpunkte (N), die mit einem Eingang (36) des elektrischen Energiespeichers (30) verbunden sind, verbunden sind;
wobei jedes Stromversorgungsmodul (20) einen bidirektionalen Abwärts-/Aufwärtswandler (40), der den anderen Eingang (34) des elektrischen Energiespeichers (30) mit einem positiven Potential (DC+) oder einem negativen Potential (DC-) des Gleichspannungszwischenkreises (24) des jeweiligen Stromversorgungsmoduls (20) zusammenschaltet, umfasst.

10. Verfahren zum Betreiben eines Stromversorgungssystems (10), wobei das Verfahren Folgendes umfasst:
Laden eines elektrischen Energiespeichers (30) aus einem Gleichspannungszwischenkreis (24) von wenigstens einem Stromversorgungsmodul (20) des Stromversorgungssystems (10) mit einem bidirektionalen Abwärts-/Aufwärtswandler (40), wobei der elektrische Energiespeicher (30) mit einem Eingang (36) zu einem Neutralpunkt (N) des Stromversorgungsmoduls (20) und mit einem weiteren Eingang (34) zum Abwärts-/Aufwärtswandler (40) verbunden ist, wobei der bidirektionale Abwärts-/Aufwärtswandler (40) mit einem positiven Potential (DC+) oder einem negativen Potential (DC-) des Gleichspannungszwischenkreises (24) verbunden ist und mit dem Neutralpunkt (N) verbunden ist; und
Versorgen des Gleichspannungszwischenkreises (24) mit elektrischer Energie durch Entladen des elektrischen Energiespeichers (30) über den bidirektionalen Abwärts-/Aufwärtswandler (40) an den Gleichspannungszwischenkreis (24).

11. Verfahren nach dem Anspruch 10, das weiterhin Folgendes umfasst:
Ausgleichen von in den Gleichspannungszwischenkreiskondensatoren (28) des Stromversorgungsmoduls (20) gespeicherter elektrischer Energie während des Entladens des elektrischen Energiespeichers (30) durch Betreiben eines weiteren Abwärts-/Aufwärtswandlers (60), der den Neutralpunkt (N), das negative Potential (DC-) und das positiven Potential (DC+) des Gleichspannungszwischenkreises (24) zusammenschaltet.

12. Verfahren nach dem Anspruch 11, das weiterhin Folgendes umfasst:
Laden des elektrischen Energiespeichers (30) aus dem Gleichspannungszwischenkreis (24) von wenigstens einem Stromversorgungsmodul (20) des Stromversorgungssystems (10) durch den bidirektionalen Abwärts/Aufwärtswandler (40), wobei eine Gleichspannungskomponente eines von einem elektrischen Netzwerks bezogenen Stroms mittels des weiteren Abwärts-/Aufwärtswandlers (60) vorausschauend geregelt wird.

13. Regeleinrichtung (38) für ein Stromversorgungssystem (10) nach einem der Ansprüche 1 bis 9, die ausgelegt ist, um das Verfahren nach einem der Ansprüche 10 bis 12 vorzunehmen.

## Revendications

1. Système d'alimentation électrique (10) pour alimenter une charge (18) en énergie électrique provenant d'un réseau électrique (14), le système d'alimentation électrique (10) comprenant au moins un module d'alimentation électrique (20), qui comprend :
une liaison à courant continu (CC) (24) qui doit être fournie à partir du réseau électrique (14) ; et
un onduleur (26) raccordé à la liaison CC (24) et conçu pour convertir une tension continue de la liaison CC (24) en une tension alternative qui doit être fournie à la charge (18) ; ;
dans lequel le système d'alimentation électrique (10) comprend un accumulateur d'énergie électrique (30) qui doit être chargé par la liaison CC (24) et destiné à alimenter la liaison CC (24) en énergie électrique lorsque le réseau électrique (14) présente une coupure de courant, l'accumulateur d'énergie électrique (30) étant raccordé avec une entrée (36) à un point neutre (N) du module d'alimentation électrique (20) ;
dans lequel la liaison CC (24) comprend au moins deux condensateurs (28) interconnectés en série entre le potentiel positif (CC+) et le potentiel négatif (CC-) de la liaison CC (24), dans lequel le point neutre (N) est disposé entre les deux ou plus condensateurs (28)
dans lequel le module d'alimentation électrique (20) comprend un convertisseur bidirectionnel abaisseur/élévateur de tension (40) pour charger et décharger l'accumulateur d'énergie électrique (30) raccordé au potentiel positif (CC+) ou au potentiel négatif (CC-) de la liaison CC (24), au point neutre (N) et à une autre entrée (34) de l'accumulateur d'énergie électrique (30)
dans lequel le module d'alimentation électrique (20) comprend un autre convertisseur bidirectionnel abaisseur/élévateur de tension (60) pour équilibrer l'énergie électrique stockée dans les condensateurs de liaison CC (28) interconnectant le point neutre (N), le potentiel négatif (CC-) et le potentiel positif (CC+) de la liaison CC (24).

2. Système d'alimentation électrique (10) selon la revendication 1,
dans lequel l'accumulateur d'énergie électrique (30) comprend seulement deux entrées (34, 36).

3. Système d'alimentation électrique (10) selon l'une des revendications précédentes,
dans lequel le convertisseur abaisseur/élévateur de tension (40) et/ou l'autre convertisseur abaisseur/élévateur de tension (60) comprennent deux commutateurs à semi-conducteurs (44, 64) raccordés en série comportant une première sortie (52, 72) et une deuxième sortie (54, 74), et une inductivité (48, 68) raccordée avec une entrée entre les deux commutateurs à semi-conducteurs (44, 46) et fournissant avec une autre extrémité une troisième sortie (56, 76).

4. Système d'alimentation électrique (10) selon la revendication 3,
dans lequel le convertisseur abaisseur/élévateur de tension (40) et/ou l'autre convertisseur abaisseur/élévateur de tension (60) comprennent deux diodes (46, 66), chaque diode étant raccordée en parallèle à l'un des commutateurs à semi-conducteurs (44, 46) .

5. Système d'alimentation électrique (10) selon la revendication 3 ou 4,
dans lequel le convertisseur abaisseur/élévateur de tension (40) pour charger et décharger l'accumulateur d'énergie électrique (30) est raccordé avec la première sortie (52) à l'accumulateur d'énergie électrique (30), avec la deuxième sortie (54) au point neutre (N) et avec la troisième sortie (56) au potentiel positif (CC+) ou au potentiel négatif (CC-) de la liaison CC (24).

6. Système d'alimentation électrique (10) selon la revendication 3 ou 4,
dans lequel le convertisseur abaisseur/élévateur de tension (40) pour charger et décharger l'accumulateur d'énergie électrique (30) est raccordé avec la première sortie (52) au potentiel positif (CC+) ou au potentiel négatif (CC-) de la liaison CC (24), avec la deuxième sortie (54) au point neutre (N) et avec la troisième sortie (56) à l'accumulateur d'énergie électrique (30).

7. Système d'alimentation électrique (10) selon l'une des revendications 3 à 6,
dans lequel l'autre convertisseur abaisseur/élévateur de tension (60) est raccordé avec la première sortie (72) au potentiel positif (CC+) de la liaison CC (24), avec la deuxième sortie (74) au potentiel négatif (CC-) de la liaison CC (24) et avec la troisième sortie (76) au point neutre (N).

8. Système d'alimentation électrique (10) selon l'une des revendications précédentes,
dans lequel le système d'alimentation électrique (10) comprend une pluralité de modules d'alimentation électrique (20), chaque module d'alimentation électrique (20) comprenant une liaison CC (24) raccordée à l'accumulateur d'énergie électrique (30).

9. Système d'alimentation électrique (10) selon la revendication 8,
dans lequel les modules d'alimentation électrique (20) sont raccordés par le biais de leurs points neutres (N), qui sont raccordés à une entrée (36) de l'accumulateur d'énergie électrique (30) ;
dans lequel chaque module d'alimentation électrique (20) comprend un convertisseur bidirectionnel abaisseur/élévateur de tension (40) interconnectant l'autre entrée (34) de l'accumulateur d'énergie électrique (30) à un potentiel positif (CC+) ou à un potentiel négatif (CC-) de la liaison CC (24) du module d'alimentation électrique respectif (20).

10. Procédé pour faire fonctionner un système d'alimentation électrique (10), le procédé comprenant :
charger un accumulateur d'énergie électrique (30) à partir d'une liaison CC (24) d'au moins un module d'alimentation électrique (20) du système d'alimentation électrique (10) avec un convertisseur bidirectionnel abaisseur/élévateur de tension (40), dans lequel l'accumulateur d'énergie électrique (30) est raccordé avec une entrée (36) à un point neutre (N) du module d'alimentation électrique (20) et avec une autre entrée (34) au convertisseur abaisseur/élévateur de tension (40), dans lequel le convertisseur bidirectionnel abaisseur/élévateur de tension (40) est raccordé à un potentiel positif (CC+) ou à un potentiel négatif (CC-) de la liaison CC (24) et est raccordé au point neutre (N) ; et
alimenter la liaison CC (24) en énergie électrique en déchargeant l'accumulateur d'énergie électrique (30) par le biais du convertisseur bidirectionnel abaisseur/élévateur de tension (40) à la liaison CC (24).

11. Procédé selon la revendication 10, comprenant en outre :
équilibrer l'énergie électrique stockée dans les condensateurs de liaison CC (28) du module d'alimentation électrique (20) pendant la décharge de l'accumulateur d'énergie électrique (30) en faisant fonctionner un autre convertisseur abaisseur/élévateur de tension (60) interconnectant le point neutre (N), le potentiel négatif (CC-) et le potentiel positif (CC+) de la liaison CC (24) .

12. Procédé selon la revendication 11, comprenant en outre :
charger l'accumulateur d'énergie électrique (30) à partir de la liaison CC (24) d'au moins un module d'alimentation électrique (20) du système d'alimentation électrique (10) avec le convertisseur bidirectionnel abaisseur/élévateur de tension (40), dans lequel une composante continue d'un courant tiré d'un réseau électrique (14) est régulée de façon active au moyen de l'autre convertisseur abaisseur/élévateur de tension (60) .

13. Dispositif de commande (38) pour un système d'alimentation électrique (10) selon l'une des revendications 1 à 9, conçu pour effectuer le procédé de l'une des revendications 10 à 12.
